# EUROPEAN PATENT SPECIFICATION

(11) **EP 1 967 345 B1**
(45) Date of publication and mention of the grant of the patent: **07.08.2019**
(21) Application number: 06843182.4
(22) Date of filing: 25.12.2006
(51) Int. Cl.: B29C 45/00, C08J 9/32, B29K 105/04, B29C 44/58

(54) **MOLDED FOAM ARTICLE AND METHOD OF PRODUCING MOLDED FOAM ARTICLE**
FORMKÖRPER AUS SCHAUMSTOFF UND VERFAHREN ZUR HERSTELLUNG EINES FORMKÖRPERS AUS SCHAUMSTOFF
ARTICLE EN MOUSSE MOULÉ ET PROCÉDÉ DE FABRICATION D UN ARTICLE EN MOUSSE MOULÉ

(30) Priority: 27.12.2005 JP 2005376362; 15.12.2006 JP 2006338993
(43) Date of publication of application: 10.09.2008
(73) Proprietor: Sekisui Chemical Co., Ltd., Osaka 530-8565 (JP)
(72) Inventor: KAWAGUCHI, Yasuhiro, Shunan-shi, Yamaguchi;7460006 (JP); SAWA, Takashi, Osaka 6188589 (JP)
(74) Representative: Hart-Davis, Jason
(86) International application number: PCT/JP2006/325779
(87) International publication number: WO 2007/074773

(56) References cited:
- EP-A1- 1 577 359
- DE-A1- 10 005 862
- JP-A- 09 019 635
- JP-A- 10 152 575
- JP-A- H09 234 758
- JP-A- 2001 191 355
- JP-A- 2002 283 382
- JP-A- 2003 220 639
- JP-A- 2003 246 382
- US-A- 6 010 656
- US-A1- 2003 015 815

## Description

### TECHNICAL FIELD

The present invention relates to: a method for producing a foamed article, whereby even in the case of using thermally expandable microcapsules for injection molding, the thermally expandable microcapsules can expand uniformly to give a foaming mold having a high expansion ratio, a light weight and an excellent appearance.

### BACKGROUND ART

A resin foam is used for various applications since it is possible to exert various performances such as heat shielding property, heat insulating property, sound shielding property, sound absorbing property, damping property, and reduction in weight, by changing a material, a state of formed air bubbles, and the like. Used as the resin foam are a resin sheet made of polyvinyl chloride, olefin-type thermoplastic elastomer, and the like formed on the surface of a foamed resin such as polyurethane foam, polypropylene foam, polyethylene foam, and polyvinyl chloride foam, the foamed resin being obtained by foaming a chemical foaming agent; a cushioning material made of a composite mold formed by pasting fabric and the like, as a cover material, together to the resin sheet; and the like . In recent years, there has been also proposed a foam with a cover material obtained by injection molding, through a cavity moving method, (a) a thermoplastic elastomer containing a chemical foaming agent and (b) a resin for the cover, instead of injection molding those formed by pasting a cover material together.

However, a molding resin composition containing a chemical foaming agent may not foam even after being heated, and handling thereof was difficult in that, for example, the foaming agent may decompose rapidly in a molding machine upon use for injection molding. In addition, neither a sufficient expansion ratio nor the desired hardness as a molded body was not obtained in some cases depending on kinds of used resins.

In contrast to this, Patent Document 1 discloses that an injection foaming mold having a high hardness and expansion ratio and having uniform air bubbles formed regardless of kinds of resins can be obtained by using a masterbatch pellets of an ethylene-α-olefin copolymer containing chemical foaming agents such as an azo compound, a nitroso compound, a hydrazine derivative, and a bicarbonate.

However, chemical foaming agents decomposed by heating sometimes inevitably generated a foaming residue as well as decomposed gas, and the residue that remained in the molded body sometimes affected the adhesion performance of the molded body. In addition, upon use of the chemical foaming agents, there was a problem that since not all of the portions served as closed cells but some thereof inevitably served as open cells, it was difficult to obtain a foaming mold having very high airtightness.

The reason why not all of the portions served as closed cells as described above was that the viscosity of the resin was so low that foaming power of the decomposed gas exceeded a melt tension of the resin and cell walls of the resin was torn. Then, especially upon applying it to an injection molding method, "a cooling period of time before opening a die" was required for filling a resin into a die and subsequently cooling the resin in order to lower a temperature of the resin and increase a viscosity thereof.

In contrast to this, attempts to produce a foaming mold by using thermally expandable microcapsules instead of chemical foaming agents have been made in recent years. For example, Patent Document 2 discloses a thermoplastic elastomer foam formed by foaming a crosslinked thermoplastic elastomer composition made of a radical crosslinkable elastomer and a thermoplastic resin with thermally expandable microcapsules.

In addition, Patent Document 3 discloses a thermally expandable microcapsule in which non-nitrile-type monomers are methacrylic esters or acrylic esters in the thermally expandable microcapsules. In the thermally expandable microcapsules, volatile inflating agents are microencapsulated by using polymers obtained from polymerization components containing 80% by weight or more of nitrile-type monomers, 20% by weight or less of non-nitrile-type monomers, and 0.1 to 1% by weight of crosslinking agents.

Patent Document 4 further discloses a thermally expandable microcapsule comprises: a shell polymer containing a homopolymer or a copolymer of ethylene unsaturated monomers containing 85% by weight or more of nitrile-type monomers; and a foaming agent containing 50% by weight or more of isooctane.

However, even in the case of producing a foaming mold using the thermally expandable microcapsules, upon applying it to injection molding, a satisfactory foaming mold was not obtained due to facing problems that: the desired expansion ratio (specific gravity) was not obtained; a distortion and a poor appearance occurred in the molded body; or even though the desired expansion ratio was obtained, foaming occurred on the surface of the molded body, the molded body had a surface roughness, and the appearance thereof was deteriorated.
Patent Document No. 1: Japanese Kokai Publication 2000-178372;
Patent Document No. 2: Japanese Kokai Publication Hei-11-343362;
Patent Document No. 3: Japanese Patent No. 2894990;
Patent Document No. 4: EP 1149628 A1

JP 2003-246382 A shows a foamed article having uniform and closed cells, which has a cell diameter of 60 to 120 µm, a specific gravity of 0.6 g/ml or less, and a surface roughness of 4 µm or less.

JP H09-234758 A and US 2003/015815 A1 show methods according to the preamble of claim 1.

JP 2001 191355 A and JP 2002 283382 A show methods for producing open cell foamed products.

### DISCLOSURE OF THE INVENTION

### PROBLEMS TO BE SOLVED BY THE INVENTION

It is an object of the present invention to provide: a foaming mold having a high expansion ratio and a light weight and having an excellent appearance with no surface roughness with a method for producing a foaming mold, whereby even in the case of using thermally expandable microcapsules for injection molding, the thermally expandable microcapsules can expand uniformly to give a foaming mold having a high expansion ratio and an excellent appearance.

### MEANS FOR SOLVING THE PROBLEMS

The present invention is defined in the claims.

With uniform
and closed cells, a foaming mold is excellent in lightweight property, heat insulating property, shock resistance, rigidity, and the like, can be preferably used for applications such as home building materials, automobile members, and shoe soles, and can be particularly preferably used as automobile members.

With respect to a cell diameter of a foaming mold producible with the present invention, the lower limit thereof is 60 µm, and the upper limit thereof is 120 µm.

In the case where it is less than 60 µm, cells are so small that the requirement of the foaming mold in terms of various performances such as heat insulating property and reduction in weight cannot be satisfied; whereas in the case where it exceeds 120 µm, cells are so large that the strength of the foaming mold is reduced. The preferable lower limit thereof is 70 µm, and the preferable upper limit thereof is 100 µm.

Moreover, the cell diameter refers to an average maximum diameter of air bubbles present in any location of the foaming mold, and it is possible to find the cell diameter, for example, by observing a cross section of the foaming mold under a microscope or the like and subsequently calculating an average value of the maximum diameter of the observed air bubbles.

The upper limit of the specific gravity of a foaming mold producible with the present invention is 0.6 g/ml. In the case where it exceeds 0.6 g/ml, the requirement of the foaming mold in terms of various performances such as heat insulating property and reduction in weight cannot be satisfied. The preferable upper limit thereof is 0.580 g/ml, and the preferable lower limit thereof is 0.480 g/ml.

The specific gravity can be measured in accordance with Method A (underwater substitution method) based on JIS K 7112, for example.

The upper limit of the surface roughness of the foaming mold producible with the present invention is 4 µm. In the case where it exceeds 4 µm, the appearance of the foaming mold is markedly impaired. The preferable upper limit thereof is 2 µm. Moreover, the surface roughness refers to a height of the maximum crest on the surface of the foaming mold, and the surface roughness can be measured by using a surface roughness shape measuring apparatus or the like in accordance with a method based on JIS B 0601, for example.

It is possible to make the foaming mold producible with the present invention into a composite mold by laminating a cover material on the surface, and to process the foaming mold into secondary products and tertiary products.

Examples of the cover material include leather, a resin film, a woven fabric, an unwoven fabric, and the like. In addition, by using as the cover material a silicone stamper and the like that have been transferred from genuine leather, stone, or wood and to which projections and depressions are given, a composite mold to the surface of which design of patterns of lenticels, wood grains, or the like is applied may be formed, or a composite mold having a three-layer structure may be formed by further forming on the surface a hard foam layer that is to serve as an aggregate.

In addition, by using a metal as the cover material, it is possible to form an integrated metal forming-type metal/resin hybrid molded body by injection molding to the metal a composition containing matrix resins and thermally expandable microcapsules. Moreover, a foam layer comprising a foaming mold, and a cover layer comprising a cover material are preferably formed by a thermoplastic elastomer of the same kind from
viewpoints of recycling and the like.

One of the preferred embodiments of the foaming mold producible with the present invention is a polyolefin molded body that reduces environmental load, facilitates recycling, and is widely used as home building materials, automobile members, and the like.

Examples of the automobile members include: interior material molded bodies such as a door trim and an instrument panel (inpane); body materials such as a bumper; and the like. In addition, the foaming mold can be also used as shoe soles or the like.

The present invention is the method for producing a foaming mold through injection molding of claim 1, which comprises: a melting and kneading step of heating a matrix resin, and a thermally expandable microcapsule having a foaming starting temperature of 160 to 180°C, to a temperature not less than the foaming starting temperature of the thermally expandable microcapsule, to produce a melt mixture; and a foaming step of foaming the thermally expandable microcapsule by filling the melt mixture into a die and subsequently opening the die, a period of time from the completion of filling of the melt mixture to the opening of the die being set to 2 to 4 seconds in the foaming step.

A reference method for producing a foaming mold is a method for producing a foaming mold through injection molding, which comprises: a melting and kneading step of heating a matrix resin, and a thermally expandable microcapsule having a foaming starting temperature of 190 to 210°C, to a temperature not less than the foaming starting temperature of the thermally expandable microcapsule, to produce a melt mixture; and a foaming step of foaming the thermally expandable microcapsule by filling the melt mixture into a die and subsequently opening the die, a period of time from the completion of filling of the melt mixture to the opening of the die being set to 1 second or less in the foaming step.

The present inventors have made investigations and have found that the reason why a molded body in which thermally expandable microcapsules are sufficiently foamed cannot be obtained upon injection molding by using a resin having thermally expandable microcapsules is that a long period of time from the completion of filling of the melt mixture to the opening of the die leads to formation of a thick skin layer by solidification of only the periphery of the filled melt mixture and inhibition of foaming of the thermally expandable microcapsules by the skin layer.

And the present inventors have made further investigations and have found that: an unnecessarily thick skin layer is not formed by using thermally expandable microcapsules at a foaming starting temperature within a predetermined range and setting the period of time from the completion of filling of the melt mixture to the opening of the die within a predetermined range; and it is possible to obtain a foaming mold having high expansion ratio and mechanical strength and having an excellent appearance by uniformly foaming thermally expandable microcapsules. The present inventors thus have completed the method for producing the foaming mold of the present invention.

The method for producing the foaming mold of the first invention comprises a melting and kneading step of heating a matrix resin, and a thermally expandable microcapsule having a foaming starting temperature of 160 to 180°C, to a temperature not less than the foaming starting temperature of the thermally expandable microcapsule, to produce a melt mixture.

In the method for producing the foaming mold of the invention, there is employed a thermally expandable microcapsule at a foaming starting temperature of 160 to 180°C.

In the method for producing the foaming mold of the invention, as described later, it is possible to obtain the foaming mold having a high expansion ratio and having an excellent appearance by using thermally expandable microcapsules at a foaming starting temperature within the range and setting a die open delay period of time to a predetermined period of time.

The preferable lower limit of the foaming starting temperature of the thermally expandable microcapsule is 165°C, and the preferable upper limit thereof is 175°C.

In the method for producing the foaming mold of the invention, by heating the thermally expandable microcapsules to a temperature not less than the foaming starting temperature of the thermally expandable microcapsules, it is possible to foam the thermally expandable microcapsules by canceling a pressurized state after opening a die, and consequently to obtain a foaming mold. Moreover, in the method for producing the foaming mold of the invention, the thermally expandable microcapsules are in a pressurized state and do not foam until opening the die.

In the method for producing the foaming mold of the invention, the preferable lower limit of the maximum foaming temperature (Tmax) of the thermally expandable microcapsules is 190°C. It is possible to reduce the deflation of the thermally expandable microcapsules upon carrying the thermally expandable microcapsules in a cylinder, by setting the Tmax to 190°C or more.

In the case where it is less than 190°C, since the deflation of the thermally expandable microcapsules occurs in a cylinder, reduction in an expansion ratio may occur.

Moreover, in the present description, the maximum foaming temperature means a temperature upon a diameter of the thermally expandable microcapsule reaching the maximum (maximum displacement amount) when the diameter is measured while heating the thermally expandable microcapsules from a normal temperature.

As the thermally expandable microcapsule, a thermally expandable microcapsule is preferable in which a volatile inflating agent that becomes gaseous at a temperature less than the softening point of the shell is contained as a core agent in the shell formed by polymerizing a vinyl-type monomer composition containing 60% by weight or more of nitrile-type monomers, 40% by weight or less of non-nitrile-type monomers, 0.1 to 10% by weight of metal cations, and crosslinking agents.

It is possible to realize the thermally expandable microcapsule having the Dmax, the Tmax, and the Ts within the above-mentioned range by using the vinyl-type monomer composition and the volatile inflating agent.

The nitrile-type monomer is not particularly limited, and examples thereof include acrylonitrile, methacrylonitrile, α-chloroacrylonitrile, α-ethoxyacrylonitrile, fumaronitrile, any mixture of these, and the like. Acrylonitrile or methacrylonitrile is preferably used among them.

In the method for producing the foaming mold of the invention, the preferable lower limit of the content of the nitrile-type monomers in the vinyl-type monomer composition (as a raw material of the shell) is 60% by weight. In the case where it is 60% by weight or less, the expansion ratio may be lowered due to a reduced gas barrier property of the shell.

The more preferable lower limit thereof is 70% by weight, and the more preferable upper limit thereof is 80% by weight.

The non-nitrile-type monomer is selected from the group consisting of: acrylic esters including methyl acrylate, ethyl acrylate, butyl acrylate, and dicyclopentenyl acrylate; and methacrylic esters including methyl methacrylate, ethyl methacrylate, butyl methacrylate and isobornyl methacrylate. Methyl methacrylate, ethyl methacrylate, and methyl acrylate are particularly preferable among these.

The preferable upper limit of the content of the non-nitrile-type monomers in the vinyl-type monomer composition is 40% by weight. In the case where it exceeds 40% by weight, the expansion ratio may be lowered due to a reduced gas barrier property of the shell in the same manner as in the above.

The more preferable upper limit thereof is 30% by weight, and the more preferable lower limit thereof is 20% by weight.

The vinyl-type monomer composition contains a metal cation. Since by polymerizing the vinyl-type monomer composition containing a metal cation, the metal cation presumably reacts with non-nitrile-type monomers and a copolymer to be obtained is presumably ionically crosslinked, heat resistance improves, and it is possible to form a thermally expandable microcapsule that is resistant to burst and shrink in the high temperature region for a long period of time. In addition, since the modulus of elasticity of the shell tends not to decrease also in the high temperature region, even in the case of performing molding processes, to which strong shearing force is applied, such as kneading molding, calender molding, extrusion molding, and injection molding, burst and shrinkage of the thermally expandable microcapsules do not occur.

Metal cations that react with non-nitrile-type monomers and are ionically crosslinked include ions such as Na, K, Li, Zn, Mg, Ca, Ba, Sr, Mn, Al, Ti, Ru, Fe, Ni, Cu, Cs, Sn, Cr, and Pb. Out of these, the ions of Ca, Zn, and Al, which are divalent or trivalent metal cations, are preferable, and the ion of Zn is particularly preferable. These metal cations may be used independently or two or more of them may be used in combination.

Moreover, the combinations in which two or more of the metal cations are used are to use alkali metal ions in combination with metal cations other than the alkali metals. Having the alkali metal ions enables activation of functional groups such as vinyl-type monomers and promotion of the reaction between the metal cations other than the alkali metals and the carboxyl group. Examples of the alkali metals include Na, K, Li, and the like.

The lower limit of the content of the metal cation in the vinyl-type monomer composition is 0.1% by weight, and the upper limit thereof is 10% by weight. In the case where it is less than 0.1% by weight, copolymers sometimes cannot be ionically crosslinked
sufficiently, leading to failure to obtain the effect of improving heat resistance; whereas in the case where it exceeds 10% by weight, a foaming property may be markedly deteriorated.

The shell preferably contains a crosslinking agent. Containing the crosslinking agent enables reinforcement of the strength of the shell and makes it difficult to break foams in the inner part of the cell walls upon thermal expansion.

The crosslinking agent is not particularly limited, and in general, a monomer having two or more radical polimerizable double bonds is preferably used. Specific examples thereof include divinylbenzene, ethylene glycol di(meth)acrylate, diethylene glocol di(meth)acrylate, triethylene glycol di(meth)acrylate, propylene glycol di(meth)acrylate, 1,4-butanediol di(meth)acrylate, 1,6-hexanediol di(meth)acrylate, 1,9-nonanediol di(meth)acrylate, polyethylene glycol di(meth)acrylate having a molecular weight of 200 to 600, glycerin di(meth)acrylate, trimethylolpropane di(meth)acrylate, trimethylolpropane tri(meth)acrylate, ethylene oxide-modified trimethylolpropane tri(meth)acrylate, pentaerythritol tri(meth)acrylate, triaryl formal tri(meth)acrylate, pentaerythritol tetra(meth)acrylate, dipentaerythritol hexa(meth)acrylate, dimethylol-tricyclodecane di(meth)acrylate, and the like. Since thermally expanded microcapsules tend not to shrink even in the high temperature region exceeding 200°C and tend to maintain an expanded state, out of these, bifunctional crosslinking agents such as polyethylene glycol di(meth)acrylate are preferable, and trifunctional crosslinking agents such as trimethylolpropane tri(meth)acrylate are more preferable.

The preferable lower limit of the content of the crosslinking agent in the shell is 0.1% by weight, and the preferable upper limit thereof is 3 % by weight. The more preferable lower limit thereof is 0.1% by weight, and the more preferable upper limit thereof is 1% by weight.

In addition, the shell of the thermally expandable microcapsule comprises: a copolymer having a segment derived from nitrile-type monomers and a segment derived from radical polymerizable unsaturated carboxylic acid monomers having a carboxyl group and having a carbon number of 3 to 8 other than ester residue; and 0.1 to 10% by weight of divalent or trivalent metal cations.

As the radical polymerizable unsaturated carboxylic acid monomer having a carboxyl group and having a carbon number of 3 to 8 other than ester residue, a radical polymerizable unsaturated carboxylic acid monomer having one or more free carboxyl groups per molecule for ionic crosslinking can be used, and specific examples thereof include: unsaturated monocarboxylic acids such as acrylic acid, methacrylic acid, ethacrylic acid, crotonic acid, and cinnamic acid; unsaturated dicarboxylic acids or the anhydrides thereof such as maleic acid, itaconic acid, fumaric acid, citraconic acid, and chloromaleic acid; monoesters of unsaturated dicarboxylic acids and derivatives thereof such as maleic acid monomethyl, maleic acid monoethyl, maleic acid monobutyl, fumaric acid monomethyl, fumaric acid monoethyl, itaconic acid monomethyl, itaconic acid monoethyl, itaconic acid monobutyl; and the like. These may be used independently or two or more of them may be used in combination. Acrylic acid, methacrylic acid, maleic acid, maleic anhydride, and an itaconic acid are preferable among these.

In the copolymer forming the shell, the lower limit of the content of the segment derived from radical polymerizable unsaturated carboxylic acid monomers having a carboxyl group and having a carbon number of 3 to 8 other than ester residue is 10% by weight, and the preferable upper limit thereof is 50% by weight. In the case where it is less than 10% by weight, the maximum foaming temperature may be 180°C or less; whereas in the case where it exceeds 50% by weight, it is not preferable since an expansion ratio may decrease although the maximum foaming temperature may improve.

As needed, the copolymer may have a segment other than the segment derived from nitrile-type monomers and the segment derived from radical polymerizable unsaturated carboxylic acid monomers having a carboxyl group and having a carbon number of 3 to 8 other than ester residue. Examples thereof include segments and the like derived from: acrylic esters such as methyl acrylate, ethyl acrylate, butyl acrylate, and dicyclopentenyl acrylate; methacrylic esters such as methyl methacrylate, ethyl methacrylate, butyl methacrylate and isobornyl methacrylate; vinyl monomers such as vinyl acetate and styrene; and the like. These monomers may be appropriately selected based on properties necessary for thermally expandable microcapsules. Among others, methyl methacrylate, ethyl methacrylate and methyl acrylate are preferably used.

However, the preferable content of such a segment is less than 10% by weight. In the case where it is 10% by weight or more, a gas barrier property of the shell may be reduced.

The preferable lower limit of the weight average molecular weight of the copolymer is 100,000, and the preferable upper limit thereof is 2,000,000. In the case where it is less than 100,000, the strength of the shell may decrease; whereas in the case where it exceeds 2,000,000, the strength of the shell may become too high and the expansion ratio may decrease.

In the thermally expandable microcapsule, the preferable lower limit of the degree of cross-linkage of the shell is 75% by weight. In the case where it is less than 75% by weight, the maximum foaming temperature may decrease.

The degree of cross-linkage includes both: covalent crosslinking by a crosslinking agent; and ionic crosslinking by a free carboxyl group that the copolymer has and a metal cation.

Moreover, in the thermally expandable microcapsule, since a portion or the entirety of the free carboxyl group that the copolymer has ionizes and becomes carboxylate anions to form an ionic bond with the metal cation serving as a counter cation, the degree of cross-linkage can be easily adjusted by the content of the metal cation.

In addition, in the case of performing infrared absorption spectrometry, for example, the ion crosslinking can be observed by the presence of absorption by the asymmetric stretching motion of COO- in the vicinity of 1500 to 1600 cm⁻¹.

In the thermally expandable microcapsule, the preferable lower limit of the degree of neutralization of the shell is 5%. In the case where it is less than 5%, the maximum foaming temperature may decrease.

Moreover, the degree of neutralization indicates a proportion of the carboxyl groups combined with the metal cation out of the free carboxyl groups that the copolymer has.

The thermally expandable microcapsule, in the case of using a thermally expandable microcapsule having a shell that contains the copolymer having the segment derived from nitrile-type monomers and the segment derived from radical polymerizable unsaturated carboxylic acid monomers having a carboxyl group and having a carbon number of 3 to 8 other than ester residue, uses divalent or trivalent metal cations as the metal cations.

Since the metal cation presumably reacts with a carboxyl group of the copolymer contained in the shell and the copolymers are presumably ionically crosslinked, heat resistance improves, and it is possible to form a thermally expandable microcapsule that is resistant to burst and shrink in the high temperature region for a long period of time. In addition, since the modulus of elasticity of the shell tends not to decrease also in the high temperature region, even in the case of performing molding processes, to which strong shearing force is applied, such as kneading molding, calender molding, extrusion molding, and injection molding, burst and shrinkage of the thermally expandable microcapsule do not occur.

The lower limit of the content of the metal cation in the shell is 0.1% by weight, and the upper limit thereof is 10% by weight. In the case where it is less than 0.1% by weight, copolymers cannot be ionically crosslinked sufficiently, leading to failure to obtain the effect of improving heat resistance; whereas in the case where it exceeds 10% by weight, a foaming property may be markedly deteriorated.

In addition, in order to ionically crosslink the carboxyl group that the copolymer has and the metal cation appropriately, it is necessary to adjust the amount of the metal cation per free carboxyl group that the copolymer has, based on the desired degree of cross-linkage. The preferable lower limit of the amount of the metal cation is 0.01-fold molar excess amount, and the preferable upper limit thereof is 0.5-fold molar excess amount, with respect to the amount of the carboxylic acid of the copolymer. In the case where it is less than 0.01-fold molar excess amount, the degree of cross-linkage does not increase, and an effect cannot be easily obtained in terms of heat resistance. Even when an amount exceeding 0.5-fold molar excess amount is blended, a further effect cannot be obtained. The more preferable lower limit is 0.05-fold molar excess amount.

If necessary, the shell may further contain a stabilizer, an ultraviolet absorber, an antioxidant, an antistatic agent, a flame retardant, a silane coupling agent, a coloring agent, and the like.

In the thermally expandable microcapsule, a volatile inflating agent is contained in the shell as a core agent.

The volatile inflating agent preferably comprises a material that becomes gaseous at a temperature not more than a softening temperature of the polymer forming the shell, and an organic solvent having a low boiling temperature is preferred.

Examples of the volatile inflating agent include: low-molecular-weight hydrocarbons such as ethane, ethylene, propane, propene, n-butane, isobutane, butene, isobutene, n-pentane, isopentane, neopentane, n-hexane, heptane, and petroleum ether; chlorofluorocarbons such as CCl₃F, CCl₂F₂, CClF₃, and CClF₂-CClF₂; tetraalkyl silanes such as tetramethyl silane, trimethylethyl silane, trimethylisopropyl silane, and trimethyl-n-propyl silane; and the like. These may be used independently or two or more of them may be used in combination.

In the thermally expandable microcapsule, out of the above-mentioned volatile inflating agents, it is preferable to use a hydrocarbon having a boiling point of 60°C or more. In the case where such a hydrocarbon is used, thermally expandable microcapsules are not easily destroyed under conditions of a high temperature and a high shear upon molding, and it is possible to provide thermally expandable microcapsules having excellent heat resistance.

Examples of the hydrocarbon having a boiling point of 60°C or more include n-hexane, heptane, isooctane, and the like. Heptane and isooctane are preferable among these.

Moreover, the hydrocarbon having a boiling point of 60°C or more may be used independently, or in combination with a hydrocarbon having a boiling point of less than 60°C.

In addition, a thermally decomposable compound that is thermally decomposed by heating and becomes gaseous may be used as a volatile inflating agent.

The preferable lower limit of the average particle diameter of the thermally expandable microcapsules is 5 µm, and the preferable upper limit thereof is 100 µm. In the case where it is less than 5 µm, air bubbles of the molded body to be obtained are so small that reduction in weight of the molded body may be insufficient. In the case where it exceeds 100 µm, air bubbles of the molded body to be obtained are so large that a problem may arise in terms of strength and the like. The more preferable lower limit thereof is 10 µm, and the more preferable upper limit thereof is 40 µm.

In the melting and kneading step, with respect to 100 parts by weight of the matrix resin, the preferable lower limit of the added amount of the thermally expandable microcapsule is 0.5 parts by weight, and the preferable upper limit thereof is 20 parts by weight. In the case where it is less than 0.5 parts by weight, the number of air bubbles of the molded body to be obtained may become small, and various performances such as reduction in weight cannot be exerted; whereas in the case where it exceeds 20 parts by weight, a problem may arise in terms of the strength, etc. of the molded body to be obtained.

The method for producing the thermally expandable microcapsule is not particularly limited, and it is possible to produce the thermally expandable microcapsule, for example, by the steps of: preparing an aqueous medium; dispersing in the aqueous medium,radical polymerizable unsaturated carboxylic acid monomers having nitrile-type monomers and a carboxyl group and having a carbon number of 3 to 8 other than ester residue, and an oily mixture containing a volatile inflating agent; adding a compound for generating a metal cation and reacting the carboxyl group with a metal cation; and polymerizing a monomer by heating a dispersion liquid.

Upon producing the thermally expandable microcapsule, the step of preparing an aqueous medium is first performed. Specifically, an aqueous dispersion medium containing a dispersion stabilizer is prepared, for example, by adding water and a dispersion stabilizer, and an auxiliary stabilizer if necessary, in a polymerization reaction vessel. And alkali nitrite metal salt, stannous chloride, stannic chloride, potassium dichromate, and the like may be added therein as needed.

Examples of the dispersion stabilizer include silica, calcium phosphate, magnesium hydroxide, aluminum hydroxide, ferric hydroxide, barium sulfate, calcium sulfate, sodium sulfate, calcium oxalate, calcium carbonate, calcium carbonate, barium carbonate, magnesium carbonate, and the like.

The added amount of the dispersion stabilizer is not particularly limited and appropriately determined by the kind of dispersion stabilizer, a particle diameter of the microcapsule, and the like. The preferable lower limit thereof is 0.1 parts by weight, and the preferable upper limit thereof is 20 parts by weight, with respect to 100 parts by weight of monomers.

Examples of the auxiliary stabilizer include a condensation product of diethanolamine and aliphatic dicarboxylic acid, a condensation product of urea and formaldehyde, polyvinyl pyrrolidone, polyethylene oxide, polyethylene imine, tetramethylammonium hydroxide, gelatin, methyl cellulose, polyvinyl alcohol, dioctyl sulfosuccinate, sorbitan ester, various emulsifiers, and the like.

In addition, combinations of the dispersion stabilizer and the auxiliary stabilizer are not particularly limited, and examples thereof include the combination of colloidal silica and a condensation product, the combination of colloidal silica and an aqueous nitrogen-containing compound, the combination of magnesium hydroxide or calcium phosphate and an emulsifier, and the like. Among others, the combination of colloidal silica and a condensation product is preferable.

Further, as the condensation product, a condensation product of diethanolamine and aliphatic dicarboxylic acid is preferable, and a condensation product of diethanolamine and adipic acid and a condensation product of diethanolamine and itaconic acid are particularly preferable.

Examples of the aqueous nitrogen-containing compound include polyvinylpyrrolidone, polyethyleneimine, polyoxyethylene alkylamine, polydialkylaminoalkyl(meth)acrylate typified by polydimethylaminoethylmethacrylate and polydimethylaminoethylacrylate, polydialkylaminoalkyl(meth)acrylamide typified by polydimethylaminopropylacrylamide and polydimethylaminopropylmethacrylamide, polyacrylamide, polycationic acrylamide, polyamine sulfone, polyallylamine, and the like. Among others, polyvinylpyrrolidone is preferably used.

The added amount of the colloidal silica is appropriately determined by a particle diameter of the thermally expandable microcapsule. The preferable lower limit thereof is 1 part by weight, and the preferable upper limit thereof is 20 parts by weight, with respect to 100 parts by weight of vinyl-type monomers. The more preferable lower limit thereof is 2 parts by weight, and the more preferable upper limit thereof is 10 parts by weight. In addition, an amount of the condensation product or the aqueous nitrogen-containing compound is also appropriately determined by a particle diameter of the thermally expandable microcapsule. The preferable lower limit thereof is 0.05 parts by weight, and the preferable upper limit thereof is 2 parts by weight, with respect to 100 parts by weight of monomers.

In addition to the dispersion stabilizer and the auxiliary stabilizer, inorganic salts such as sodium chloride and sodium sulfate may be added. By adding the inorganic salts, thermally expandable microcapsules having a more uniform particle shape can be obtained. Normally, an added amount of the inorganic salt is preferably 0 to 100 parts by weight with respect to 100 parts by weight of monomers.

The aqueous dispersion medium containing the dispersion stabilizer is prepared by blending a dispersion stabilizer or an auxiliary stabilizer with deionized water, and the pH of the water phase in this case is appropriately determined by the kind of dispersion stabilizer or auxiliary stabilizer to be used. For example, in the case where silicas such as colloidal silica are used as a dispersion stabilizer, polimerization is performed by an acidic medium; and in order to acidify an aqueous medium, acids such as hydrochloric acid are added if necessary and the pH of the system is adjusted to the range of 3 to 4. Meanwhile, upon use of magnesium hydroxide or calcium phosphate, polymerization is performed in an alkaline medium.

Subsequently, in the method for producing a thermally expandable microcapsule, a step is performed of dispersing radical polymerizable unsaturated carboxylic acid monomers having nitrile-type monomers and a carboxyl group and having a carbon number of 3 to 8 other than ester residue, and an oily mixture containing a volatile inflating agent, in the aqueous medium. In the step, the oily mixture may be prepared in the aqueous dispersion medium by separately adding a monomer and a volatile inflating agent to the aqueous dispersion medium. However, usually, both are beforehand mixed to obtain an oily mixture, and subsequently added to an aqueous dispersion medium. In this case, the oily mixture and the aqueous dispersion medium may be beforehand prepared in different containers, and added in a polymerization reaction vessel after dispersing the oily mixture in the aqueous dispersion medium by stirring and mixing in another container.

Moreover, a polymerization initiator is used for polymerizing the monomer. The polymerization initiator may be beforehand added to the oily mixture, or may be added thereto after stirring and mixing the aqueous dispersion medium and the oily mixture in the polymerization reaction vessel.

The polymerization initiator is not particularly limited, and for example, dialkyl peroxide soluble in the above-mentioned monomer, diacyl peroxide, peroxyester, peroxydicarbonate, an azo compound, and the like are preferably used. Specific examples thereof include: dialkyl peroxides such as methyl ethyl peroxide, di-t-butyl peroxide, and dicumyl peroxide; diacyl peroxides such as isobutyl peroxide, benzoyl peroxide, 2,4-dichlorobenzoyl peroxide, 3,5,5-trimethylhexanoyl peroxide; peroxyesters such as t-butyl peroxypivalate, t-hexyl peroxypivalate, t-butyl peroxyneodecanoate, t-hexyl peroxyneodecanoate, 1-cyclohexyl-1-methylethyl peroxyneodecanoate, 1,1,3,3-tetramethylbutyl peroxyneodecanoate, cumyl peroxyneodecanoate, and (α,α-bis-neodecanoylperoxy) diisopropylbenzene; peroxy dicarbonates such as bis(4-t-butyl cychlohexyl)peroxy dicarbonate, di-n-propyl-oxydicarbonate, di-isopropyl peroxydicarbonate, di(2-ethylethylperoxy)dicarbonate, dimethoxybutyl peroxy dicarbonate, and di(3-methyl-3-methoxybutylperoxy)dicarbonate; azo compounds such as 2,2'-azobisisobutyronitrile, 2,2'-azobis(4-methoxy-2,4-dimethylvaleronitrile), 2,2'-azobis(2,4-dimethyl valeronitrile), 1,1'-azobis-(1-cyclohexanecarbonitrile); and the like.

Examples of the method for emulsion dispersing an oily mixture with a predetermined particle diameter in an aqueous dispersion medium include a method for stirring with a homomixer (produced by PRIMIX Corporation, for example) and the like, a method for passing static dispersion apparatuses such as a line mixer and an element type static dispersion machine, and the like.

An aqueous dispersion medium and a polymerizable mixture may be separately supplied to the static dispersion apparatus, or a dispersion that has been mixed and stirred beforehand may be supplied thereto.

Subsequently, in the method for producing a thermally expandable microcapsule, a step is performed of adding the compound for generating a metal cation (hereinafter, also referred to as a metal cation donor) and reacting the carboxyl group with the metal cation. Through the step, since the metal cation reacts with the carboxyl group to be ionically crosslinked, heat resistance improves, and it is possible to produce thermally expandable microcapsules that are resistant to burst and shrink in the high temperature region for a long period of time. In addition, since the modulus of elasticity of the shell increases, even in the case of performing molding processes, to which strong shearing force is applied, such as kneading molding, calender molding, extrusion molding, and injection molding, burst and shrinkage of the thermally expandable microcapsule do not occur.

The metal cation donor may be added in the dispersion before polymerizing the monomer or after polymerizing the monomer. In addition, the metal cation donor itself may be added directly, or may be added in the form of a solution such as an aqueous solution.

The metal cation donor is not particularly limited, and examples thereof include an oxide of the above-mentioned metal cation, hydroxide, phosphate, carbonate, nitrate, sulfate, chloride, nitrite, sulfite, salts of each organic acid such as octyl acid and stearic acid, and the like. Among others, hydroxide, chloride, and carboxylate are preferable. Specifically, Zn(OH)₂, ZnO, Mg(OH)₂, and the like are preferable, and Zn(OH)₂ is more preferable due to its small reduction in the modulus of elasticity in the high temperature region.

In addition, in the case of adding the metal cation donor, it is preferable to add an alkali metal hydroxide and subsequently add a metal cation donor other than the alkali metal hydroxide. The preceding addition of the alkali metal hydroxide enables activation of functional groups such as a carboxyl group and promotion of the reaction with the metal cation.

In addition, since Zn(OH)₂ has low water solubility, the desired ion crosslinking may not be obtained by the addition. However, the use of the method makes it possible to obtain the same effect as in the case of adding Zn(OH)₂, by adding NaOH and subsequently adding ZnCl₂ having high water solubility, for example.

The alkali metal hydroxide is not particularly limited; and the hydroxides of Na, K, and Li are preferable, and the hydroxides of Na and K having strong basic properties are particularly preferable among others.

It is possible to produce the thermally expandable microcapsule by performing the step of heating the dispersion obtained through the above-mentioned steps and thereby polymerizing monomers. The thermally expandable microcapsule produced by the method has a high maximum foaming temperature and excellent heat resistance, and burst and shrinkage thereof do not occur in the high temperature region and upon molding processes.

The matrix resin is not particularly limited, and examples thereof include an urethane resin, an epoxy resin including a thermosetting epoxy resin, an ethylene-α-olefin copolymer, a vinyl-type chloride resin, and the like. The ethylene-α-olefin copolymer is preferable among others in terms of effectively preventing a phenomenon, the so-called "deflation", in which the thermally expandable microcapsules once expanded are heated to a high temperature and thereby shrink again.

Commercial products can also be used as the ethylene-α-olefin copolymer, and examples of the commercial products include "Engage" (produced by DuPont Dow Elastomers Japan) and the like. The ethylene-α-olefin copolymer may be used independently or may be used in the form of a mixture by mixing polypropylene. Since the ethylene-α-olefin copolymer has excellent dispersibility to polypropylene, it is possible to improve the modular performance of polypropylene rather than an EP rubber. Thereby, in the case where the mixture of polypropylene and an ethylene-α-olefin copolymer is used as a matrix resin, it is easily thin-walled.

Moreover, the ethylene-α-olefin copolymer may be used independently or two or more of them may be used in combination.

In the case where the ethylene-α-olefin copolymer is used as the matrix resin, the preferable lower limit of the maximum-melting-peak temperature Tmax (°C) of the ethylene-α-olefin copolymer by the differential scanning calorimeter (DSC) is 60°C, and the preferable upper limit thereof is 100°C. In the case where it exceeds 100°C, it may be difficult to process the resin composition containing the ethylene-α-olefin copolymer. The more preferable lower limit thereof is 60°C, and the more preferable upper limit thereof is 80°C.

The ethylene-α-olefin copolymer may be used in combination with other olefin-type thermoplastic elastomers. In this case, when the ethylene-α-olefin copolymer is used as a masterbatch, a content thereof is preferably 60 to 100% by weight, more preferably 80 to 100% by weight, and particularly preferably 100% by weight, with respect to all of the masterbatches, taking foaming property thereof into consideration.

It is determined whether a foaming mold to be obtained serves as a flexible foam or a rigid foam according to kinds of the matrix resin. That is, in the case where a flexible resin is used as the matrix resin, a foaming mold to be obtained serves as a flexible foam; whereas in the case where a rigid resin is used as the matrix resin, a foaming mold to be obtained serves as a rigid foam.

Examples of the matrix resin from which a flexible foam is obtained include an olefin-type, urethane-type, or styrene-type thermoplastic elastomer. Examples of commercial products of the olefin-type thermoplastic elastomer include "Engage" Series (produced by DuPont Dow Elastomers Japan), "Milastomer" Series (produced by Mitsui Chemicals, Inc.), "Sumitomo TPE Santoprene" Series (produced by Sumitomo Chemical Co., Ltd.), "Santoprene" Series (produced by AES), and the like. In addition, examples of the styrene-type elastomer include "Rabalon" Series produced by Mitsubishi Chemical Corporation, and the like. Further, these resins may be mixed and used according to the desired workability and hardness.

Examples of the matrix resin from which a rigid foam is obtained include a polypropylene-type resin, an acrylonitrile-butadiene-styrene copolymer (ABS) resin, a styrene-type resin, an acryl-type resin, an acrylonitrile-type resin, and the like. In addition, examples of commercial products thereof include a homopolypropylene resin "PF814" (produced by Montell Polyolefins Company), a random polypropylene resin "B230", "J704" (produced by Grand Polymer Co., Ltd.), a high-density polyethylene "3300F" (produced by Mitsui Chemicals, Inc.), and the like. In addition, these resins may be mixed and used.

In addition, the matrix resin may be a biodegradable resin, and examples thereof include "Cell Green" Series that is a cellulose-acetate-type (P-CA) resin and a polycaprolactone-type (P-H, P-HB) resin (produced by Daicel Chemical Industries, Ltd.), a polylactic acid "LACEA" (produced by Mitsui Chemicals, Inc.), and the like. In the method for producing the foaming mold of the invention, according to thermal properties, one kind of biodegradable resins may be used independently or two or more kinds thereof may be used in combination; alternatively, one kind of the biodegradable resins may be used independently or may be used in combination with other matrix resins other than the biodegradable resins.

In the method for producing the foaming mold of the invention, a resin composition for a foaming mold containing the matrix resin and the thermally expandable microcapsules can be used as a masterbatch pellet.

A method for producing the masterbatch pellet is not particularly limited, and examples thereof include a method in which raw materials, such as a matrix resin including a thermoplastic resin and various additives, for example, are beforehand kneaded using a same-direction twin-screw extruder or the like, and subsequently, the resultant mixture obtained by heating the materials to a predetermined temperature, adding foaming agents such as thermally expandable microcapsules thereto, and further kneading the mixture is cut with a pelletizer to the desired size into a pellet shape to give a masterbatch pellet. Examples thereof also include a method in which a masterbatch pellet in a pellet shape is produced by kneading raw materials, such as a matrix resin including a thermoplastic resin and thermally expandable microcapsules, with a batch-type kneader, and subsequently pelletizing the materials with a pelletizer.

The kneader is not particularly limited as long as it can knead thermally expandable microcapsules without destroying them, and examples thereof include a pressurizing kneader, a Banbury mixer, and the like.

The method for producing the foaming mold of the invention has a foaming step of foaming the thermally expandable microcapsules by filling the melt mixture into a die and subsequently opening the die. The step enables formation of fine closed cells in a uniform foaming state and production of a foaming mold having an excellent appearance.

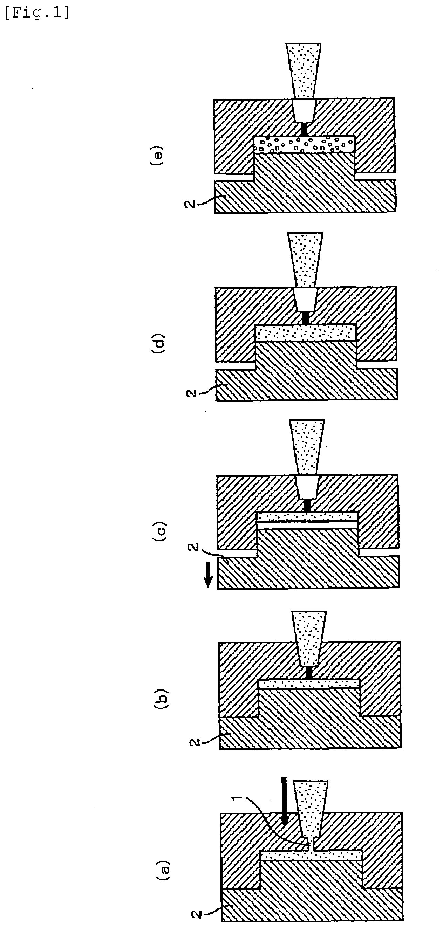

Here, Fig. 1 shows one example of a filling method and a foaming method in the foaming step.

In the foaming step, the melt mixture of thermally expandable microcapsules and matrix resins (Fig. 1(a)) is filled from a sprue 1 formed in a cavity side, which is a fixed side of the die.

Next, after the completion of filling of the melt mixture (Fig. 1(b)), the inside of the die is opened by pulling a core 2 (core back) (Fig. 1(c)).

Subsequently, after foaming the thermally expandable microcapsules included in the melt mixture (Fig. 1(d)), a foaming mold is produced by solidifying the matrix resins (Fig. 1(e)). In the method for producing the foaming mold of the invention, since the thermally expandable microcapsule works like a balloon, it is not necessary to take into consideration the melt tension of the matrix resins that poses a problem in molding of a foaming mold using a chemical foaming agent, and then it is possible to open the die immediately after the filling of the melt mixture.

In the method for producing the foaming mold of the invention, with respect to a period of time from the completion of filling of the melt mixture (Fig. 1(b)) to the opening of the die (Fig. 1(c)) (hereinafter, also referred to as a die open delay period of time), the lower limit thereof is 2 seconds, and the upper limit thereof is 4 seconds.

In the method for producing the foaming mold of the invention, by using a thermally expandable microcapsule having a foaming starting temperature of 160 to 180°C and setting a die open delay period of time to 2 to 4 seconds, the thermally expandable microcapsules are foamed uniformly without forming an unnecessarily thick skin layer; thereby, an expansion ratio is high, the desired skin layer is formed, and foaming is suppressed on the surface of the molded body; thus, it is possible to obtain a foaming mold having an excellent appearance.

In addition, the thermally expandable microcapsule works like a balloon and does not generate gas immediately, a melt viscosity of the resin may be low unlike the case of molding by using a chemical foaming agent.

In the case where the die open delay period of time is less than 2 seconds, the surface of the foaming mold to be obtained is rough and the foaming mold has an inferior appearance. In the case where the die open delay period of time exceeds 4 seconds, an unnecessarily thick skin layer is formed and the thermally expandable microcapsules fall in a solid state.

Specific methods for setting the die open delay period of time to 2 to 4 seconds in the foaming step include a method with use of an apparatus having: a detecting means for detecting the completion of filling of a melt mixture; a control means for controlling the opening of a die according to the information from the detecting means; and a die opening means for opening the die by using a signal from the control means.

Examples of the detecting means include, a means for detecting the completion of filling of the melt mixture based on a location of a screw of an injection molding apparatus in an injection step, a means for installing a pressure sensor in a predetermined location in the die and detecting the filling of the melt mixture in the location as a signal, and the like.

The preferable lower limit of the temperature of the die in the foaming step is 40°C. In the case where it is less than 40°C, a cooling velocity of the melt mixture is so fast that thermally expandable microcapsules may fall in a solid state and remain.

The reference method for producing a foaming mold is a method for producing a foaming mold through injection molding, which comprises: a melting and kneading step of heating a matrix resin, and a thermally expandable microcapsule having a foaming starting temperature of 190 to 210°C, to a temperature not less than the foaming starting temperature of the thermally expandable microcapsule, to produce a melt mixture; and a foaming step of foaming the thermally expandable microcapsule by filling the melt mixture into a die and subsequently opening the die, a period of time from the completion of filling of the melt mixture to the opening of the die being set to 1 second or less in the foaming step.

In the reference method for producing the foaming mold, with respect to the foaming starting temperature of the thermally expandable microcapsule to be used, the lower limit thereof is 190°C, and the upper limit thereof is 210°C, and even in the case of using a thermally expandable microcapsule having a foaming starting temperature of 190 to 210°C, an unnecessarily thick skin layer is not formed by setting a die open delay period of time within the range; thereby, an expansion ratio is high, and foaming is suppressed on the surface of the molded body; thus, it is possible to obtain a foaming mold having an excellent appearance.

The preferable lower limit thereof is 195°C, and the preferable upper limit thereof is 205°C.

In the reference method for producing the foaming mold, the preferable lower limit of the maximum foaming temperature (Tmax) of the thermally expandable microcapsule is 210°C. Upon carrying thermally expandable microcapsules in a cylinder, it is possible to reduce deflation of the thermally expandable microcapsules by setting the Tmax to 210°C or more.

In the case where it is less than 210°C, since the deflation of the thermally expandable microcapsules occurs in a cylinder, reduction in an expansion ratio may occur.

In the reference method for producing the foaming mold, the upper limit of the period of time from the completion of filling of the melt mixture to the opening of the die (a die open delay period of time) is 1 second.

In the reference method for producing the foaming mold, even in the case of using a thermally expandable microcapsule having a foaming starting temperature of 190 to 210°C, the thermally expandable microcapsules are foamed uniformly without forming an unnecessarily thick skin layer by setting a die open delay period of time to 1 second or less; thereby, an expansion ratio is high, the desired skin layer is formed, and foaming is suppressed on the surface of the molded body; thus, it is possible to obtain a foaming mold having an excellent appearance.

In addition, the thermally expandable microcapsule works like a balloon and does not generate gas immediately, a melt viscosity of the resin may be low unlike the case of molding by using a chemical foaming agent.

In the case where the die open delay period of time exceeds 1 second, an unnecessarily thick skin layer is formed and the thermally expandable microcapsules fall in a solid state. The preferable upper limit thereof is 0.5 seconds. Moreover, the lower limit of the die open delay period of time is not particularly limited, and is practically approximately 0.01 seconds considering mechanical restrictions.

Specific methods for reducing a die open delay period of time to 1 second or less in the foaming step include a method with use of an apparatus having: a detecting means for detecting the completion of filling of a melt mixture; a control means for controlling the opening of a die according to the information from the detecting means; and a die opening means for opening the die by using a signal from the control means.

Examples of the detecting means include a means for detecting the completion of filling of the melt mixture based on a location of a screw of an injection molding apparatus in an injection step, a means for installing a pressure sensor in a predetermined location in the die and detecting the filling of the melt mixture in the location as a signal, and the like.

It is possible to set the die open delay period of time to 1 second or less by using a mechanism of the injection molding apparatus as it is as the control means or the die opening means based on the signal obtained from the detecting means.

Moreover, a detailed description of a matrix resin and the like to be used in the reference method for producing the foaming mold will be omitted because it is the same as in the case of the method for producing the foaming mold of the invention.

However, as a volatile expansion agent, it is preferable to use two or more kinds thereof in which the difference of boiling points of a volatile expansion agent having the lowest boiling temperature and a volatile expansion agent having the highest boiling temperature is 60°C or more. Thereby, it is possible to prevent deflation of thermally expandable microcapsules in a cylinder and simultaneously ensure a foaming property in the die. Examples of these include the combination of isopentane and isooctane, and the like.

### EFFECTS OF THE INVENTION

According to the present invention, it is possible to provide: a foaming mold having a high expansion ratio and a light weight and having an excellent appearance with no surface roughness; and a method for producing a foaming mold, whereby even in the case of using thermally expandable microcapsules for injection molding, the thermally expandable microcapsules can expand uniformly to give a foaming mold having a high expansion ratio and an excellent appearance.

### BEST MODE FOR CARRYING OUT THE INVENTION

Hereinafter, the present invention will be described in further detail by way of Examples 1 to 4, and the present invention is not limited to these Examples. Examples 5 to 8 are reference examples.

### (Examples 1 to 8, Comparative Examples 1 to 19)

### (Production of thermally expandable microcapsule)

An aqueous dispersion medium was prepared by carrying, in a polymerization reaction vessel, 8 L of water, and 10 parts by weight of colloidal silica (produced by ADEKA CORPORATION) and 0.3 parts by weight of polyvinylpyrrolidone (produced by BASF SE) as dispersion stabilizers. Subsequently, a dispersion was prepared by: adding, to an aqueous dispersing medium, an oily mixture comprising monomers, crosslinking agents, volatile expansion agents, and polymerization initiators, each having a blending amount shown in Table 1; and further adding thereto a metal cation donor having a blending amount shown in Table 1. A reaction product was prepared by stirring and mixing the obtained dispersion with a homogenizer, feeding the dispersion into a nitrogen substituted pressure polymerization vessel (20 L), applying pressure thereto (0.2 MPa), and reacting the dispersion at 60°C for 20 hours. Thermally expandable microcapsules 1 to 8 were obtained after repetitive filtration and washing of the obtained reaction product and subsequent drying thereof.

### (Production of masterbatch pellet)

A masterbatch pellet was obtained by kneading 100 parts by weight of low-density polyethylene in the form of a powder and a pellet with 0.2 parts by weight of ethylene bis-stearic acid amide as a lubricant with use of a Banbury mixer, adding 50 parts by weight of the thermally expandable microcapsules obtained at a temperature of 140°C, and pelletizing them while further kneading them for 30 seconds for extrusion.

### (Production of molded body)

A plate-like molded body was obtained by mixing 5 parts by weight of the obtained masterbatch with 100 parts by weight of a polypropylene resin, supplying the obtained mixed pellet from a hopper of an electric injection molding apparatus (J180AD, produced by the Japan Steel Works, Ltd.) for melting and kneading, and performing injection molding. Moreover, the electric injection molding apparatus has a detector for continuously detecting a filled content, a computer for receiving the signal and controlling the opening of a die, and a mechanism for opening the die in conjunction with the computer.

The molding conditions are a temperature of the cylinder of 200°C and an injection velocity of 60 mm/sec, and a die open delay period of time and a die temperature were set to values shown in Table 2.

Moreover, since there occurred a more or less difference between the die open delay period of time set in the electric injection molding apparatus and the actual die open delay period of time, a measurement period of time as well the set period of time was also set forth regarding a die open delay period of time, and values of the measurement period of time were used as the die open delay period of time.

### (Comparative Examples 20 to 23)

A molded body was produced in the same manner as in Example 1, except that a chemical foaming agent was used instead of a masterbatch, 5 parts by weight of the chemical foaming agent was mixed with 100 parts by weight of a polypropylene resin, and that the obtained mixed pellet was used. Moreover, the die open delay periods of time and the die temperatures were set to periods of time and temperatures shown in Table 2.

### (Evaluation)

The following evaluations were made about thermally expandable microcapsules obtained in Examples 1 to 8 and Comparative Examples 1 to 19 and molded bodies obtained in Examples 1 to 8 and Comparative Examples 1 to 23.

Tables 1 and 2 show the results.

### (1) Evaluation of thermally expandable microcapsule

### (1-1) Volume average particle diameter

A volume average particle diameter was measured using a particle distribution meter (LA-910, produced by HORIBA, Ltd.).

### (1-2) Foaming starting temperature, maximum foaming temperature, and maximum displacement amount

A foaming starting temperature (Ts), a maximum displacement amount (Dmax), and a maximum foaming temperature (Tmax) were measured using a thermomechanical analysis apparatus (TMA) (TMA2940, produced by TA instruments). Specifically, 25 µg of a test sample was put in a aluminum container with a diameter of 7 mm and a depth of 1 mm, and heated from 80°C to 220°C with a rate of temperature rise of 5°C/min with a force of 0.1 N applied from the top, and a displacement was measured in a perpendicular direction of a measuring terminal. A temperature at which the displacement began to increase was defined as the foaming starting temperature, the maximum of the displacement was defined as the maximum displacement amount, and a temperature in the maximum displacement amount was defined as the maximum foaming temperature.

**[Table 1]**

| | | | Thermally expandable microcapsule | | | | | | | |
|---|---|---|---|---|---|---|---|---|---|---|
| | | | ① | ② | ③ | ④ | ⑤ | ⑥ | ⑦ | ⑧ |
| Added amount (parts by weight) | Monomer | Acrylonitrile | 20 | 20 | 20 | 20 | 20 | 20 | 20 | 20 |
| | | Methacrylonitrile | 30 | 30 | 30 | 30 | 30 | 30 | 30 | 30 |
| | | Methacrylic acid | 26 | 26 | 26 | 26 | 26 | 26 | 26 | 26 |
| | | Methyl methacrylate | 24 | 24 | 24 | 24 | 24 | 24 | 24 | 24 |
| | Crosslinking agent | Dipentaerythritol hexaacrylate | 0.4 | 0.4 | 0.4 | 0.4 | 0.4 | 0.4 | 0.4 | 0.4 |
| | Volatile inflating agent | Isopentane | 15 | 20 | 0 | 5 | 0 | 25 | 0 | 20 |
| | | Isooctane | 10 | 5 | 25 | 20 | 25 | 0 | 25 | 5 |
| | Metal cation donor | NaOH+ZnCl₂ | 0.5+2 | 0.2+1 | 0.5+2 | 0.5+2 | 0.5+2 | - | 0.7+2.5 | 0.5+2 |
| | Polymerization initiator | 2,2'-azobisisobutyronitrile | 0.8 | 0.8 | 0.8 | 0.8 | 0.8 | 0.8 | 0.8 | 0.8 |
| | | 2,2'-azobis(4-methoxy-2,4-dimethylvaleronitrile) | 0.6 | 0.6 | 0.6 | 0.6 | 0.6 | 0.6 | 0.6 | 0.6 |
| Volume average particle diameter (*µ* m) | | | 25 | 26 | 30 | 29 | 25 | 26 | 30 | 30 |
| Foaming starting temperature (Ts) (°C) | | | 180 | 160 | 210 | 190 | 210 | 140 | 230 | 170 |
| Maximum foaming temperature (Tmax) (°C) | | | 220 | 210 | 230 | 225 | 230 | 190 | 240 | 205 |
| Maximum displacement amount (Dmax) | | | 1220 | 1150 | 920 | 1050 | 850 | 1450 | 600 | 1200 |

### (2) Evaluation of molded body

### (2-1) Expansion ratio

The value was calculated by dividing a plate thickness of the molded body after foamed by a plate thickness of the molded body before foamed, and defined as an expansion ratio.

### (2-2) Measurement of cell diameter

The cross section of the obtained foaming mold was observed under a secondary electron reflection type electron microscope (trade name "JSM-5800LV", produced by JOEL Ltd.), and an average diameter of the observed 50 foaming cells was defined as a cell diameter (µm).

### (2-3) Measurement of specific gravity

A specific gravity of the obtained molded body was measured in accordance with Method A (underwater substitution method) based on JIS K 7112.

### (2-4) Measurement of surface roughness

With respect to the surface state of the obtained molded body, a height of the highest mountain of the molded body was measured in accordance with a method based on JIS B 0601 using a surface roughness shape measuring apparatus (SURFCOM 130A/480A, produced by Tokyo Seimitsu Co., Ltd.).

### (2-5) Silver streak

The presence of a silver streak on the surface of the obtained foaming mold was visually observed.

### (2-6) Foamed state

The foamed state of the cross section of the molded body was observed at a magnification under an SEM.

**[Table 2]**

| | | Thermally expandable microcapsule | | | | | Die open delay period of time (second) | | Die temperature | Evaluation items | | | | | |
|---|---|---|---|---|---|---|---|---|---|---|---|---|---|---|---|
| | | No. | Particle diameter | Ta | Tmax | Dmax | Set period of time | Mesurement period of time | (°C) | Expansion ratio | Cell diameter | Specific gravity | Surface roughness (height of highest mountain) | Silver streak | Foamed state |
| | | | *µ*m | °C | °C | *µ*m | | | | | *µ*m | g/ml | *µ*m | | |
| Example | 1 | ① | 25 | 180 | 220 | 1220 | 3.5 | 3.9 | 60 | 1.8 | 60 to 60 | 0.56 | 1.2 | absent | uniform and closed |
| | 2 | ② | 26 | 180 | 210 | 1150 | | | | 2 | 60 to 90 | 0.53 | 1.5 | absent | uniform and closed |
| | 3 | ① | 25 | 180 | 220 | 1220 | 1.5 | 2.2 | | 2 | 70 to 95 | 0.536 | 2.1 | absent | uniform and closed |
| | 4 | ② | 26 | 180 | 210 | 1150 | | | | 2.2 | 70 to 100 | 0.505 | 3.5 | absent | uniform and closed |
| | 5 | ③ | 30 | 210 | 230 | 920 | 0.5 | 0.9 | | 1.7 | 60 to 80 | 0.565 | 0.5 | absent | uniform and closed |
| | 6 | ④ | 29 | 190 | 225 | 1050 | | | | 1.9 | 60 to 90 | 0.54 | 0.9 | absent | uniform and closed |
| | 7 | ③ | 30 | 210 | 230 | 920 | 0 | 0.1 | | 2 | 60 to 90 | 0.525 | 1.1 | absent | uniform and closed |
| | 8 | ④ | 29 | 190 | 225 | 1050 | | | | 2.3 | 70 to 110 | 0.49 | I 1.4 | absent | uniform and closed |
| | 1 | ① | 25 | 180 | 220 | 1220 | 4.5 | 5 | 60 | 1.4 | 50 to 60 | 0.65 | 0.8 | absent | uniform and closed |
| | 2 | ① | 28 | 180 | 210 | 1150 | | | | 1.5 | 50 to 80 | 0.62 | 1 | absent | uniform and closed |
| | 3 | ① | 25 | 180 | 220 | 1220 | 0 | 0.1 | | 2.3 | 70 to 100 | 0.495 | 5 | absent | uniform and closed |
| | 4 | ② | 26 | 160 | 210 | 1150 | | | | 2.5 | 70 to 100 | 0.48 | 15 | absent | uniform and closed |
| | 5 | ③ | 30 | 210 | 230 | 920 | 1.5 | 2.2 | | 1.1 | 40 to 80 | 0.88 | 0.2 | absent | uniform and closed |
| | 6 | ④ | 29 | 190 | 225 | 1050 | | | | 1.3 | 40 to 60 | 0.83 | 0.4 | absent | uniform and closed |
| | 7 | ⑤ | 25 | 210 | 230 | 850 | 4 | 4.5 | 60 | 1.1 | 40 to 60 | 0.87 | 0.2 | absent | uniform and closed |
| | 8 | ⑥ | 26 | 140 | 180 | 1450 | | | | 2.1 | 60 to 120 | 0.5 | 12 | slightly present | nonuniform and closed |
| | 9 | ⑤ | 25 | 210 | 230 | 850 | 2 | 2.5 | | 1.3 | 40 to 60 | 0.84 | 1.2 | absent | uniform and closed |
| | 10 | ⑥ | 26 | 140 | 190 | 1450 | | | | 2.3 | 60 to 120 | 0.47 | 25 | slightly present | non uniform and closed |
| Comparative Example | 11 | ⑦ | 30 | 230 | 240 | 600 | 1 | 1.6 | | 1.2 | 40 to 60 | 0.56 | 0.2 | absent | uniform and closed |
| | 12 | ⑧ | 30 | 170 | 205 | 1200 | | | | 2.2 | 60 to 120 | 0.485 | 16 | slightly present | nonuniform and closed |
| | 13 | ⑦ | 30 | 230 | 240 | 600 | 0 | 0.1 | | 1.4 | 40 to 70 | 0.78 | 2 | absent | uniform and closed |
| | 14 | ⑤ | 30 | 170 | 205 | 1200 | | | | 2.4 | 60 to 120 | 0.475 | 20 | present | nonuniform and closed |
| | 15 | ⑧ | 25 | 210 | 230 | 850 | 8 | 6.5 | | not to form | | | | | |
| | 16 | ⑥ | 26 | 140 | 190 | 1450 | | | | 1.1 | 40 to 60 | 0.87 | 0.2 | absent | open cell |
| | 17 | ⑥ | 26 | 140 | 190 | 1450 | 0 | 0.1 | | 1.8 | 60 to 80 | 0.54 | 20 | present | nonuniform and closed |
| | 18 | ⑦ | 30 | 230 | 240 | 600 | 4 | 4.5 | | not to form | | | | | |
| | 19 | ⑧ | 30 | 170 | 205 | 1200 | | | | 1.8 | 50 to 80 | 0.55 | 8 | absent | uniform and closed |
| | 20 | Chemical foaming agent | | | | | 4 | 4.5 | 60 | 1.8 | 40 to 80 | 0.55 | 5 | present | open cell |
| | 21 | Chemical foaming agent | | | | | 2 | 2.5 | | 2 | 40 to 100 | 0.51 | 9 | present | open cell |
| | 22 | Chemical foaming agent | | | | | 1 0 | 1.5 | | 2.2 | 60 to 120 | 0.49 | 12 | present | open cell |
| | 23 | Chemical foaming agent | | | | | | 0.5 | | 2.3 | 60 to 120 | 0.485 | 25 | present | open cell |

Table 2 shows that in the cases of Examples 1 to 8, it is possible to produce a foaming mold having a high expansion ratio and a high appearance quality and having uniform and closed cells formed therein, by using thermally expandable microcapsules having a foaming starting temperature within a predetermined range and by setting a die open delay period of time to a predetermined period of time.

Meanwhile, Comparative Examples 1 and 2 were the cases where a die open delay period of time was lengthened using the same thermally expandable microcapsules as in Examples 1 and 2, and the obtained foaming molds showed a favorable appearance quality but a low expansion ratio.

Comparative Examples 3 and 4 were the cases where a die open delay period of time was shortened using the same thermally expandable microcapsules as in Examples 1 and 2, and the obtained foaming mold showed a high expansion ratio but a markedly deteriorated surface appearance. Comparative Examples 5 and 6 were the cases where a die open delay period of time was shortened using the same thermally expandable microcapsules as in Examples 5 and 6, and the obtained foaming mold showed a favorable appearance quality but a low expansion ratio.

In addition, in the case where a foaming mold was produced by combining the thermally expandable microcapsules with die open delay periods of time, as shown in Comparative Examples 7 to 19, improvements in both an expansion ratio and appearance quality thereof were not sufficiently made. Comparative Examples 20 to 23 were the cases of using chemical foaming agents, and even when a die open delay period of time (set period of time) was set to as 0, 1, 2, or 4 seconds, the obtained foaming mold had a deteriorated surface appearance, and the cell state of the cross section was also open cells.

### INDUSTRIAL APPLICABILITY

According to the present invention, it is possible to provide: a method for producing a foaming mold, whereby even in the case of using thermally expandable microcapsules for injection molding, the thermally expandable microcapsules can expand uniformly to give a foaming mold having a high expansion ratio and an excellent appearance.

### BRIEF DESCRIPTION OF THE DRAWINGS

Fig. 1 is a schematic view describing one example of a foaming step of the present invention.

## Claims

1. A method for producing a foamed article through injection molding,
which comprises:
a melting and kneading step of heating a matrix resin, and a thermally expandable microcapsule having a foaming starting temperature of 160 to 180°C, to a temperature not less than the foaming starting temperature of said thermally expandable microcapsule, to produce a melt mixture,
a foaming step (a-e) of foaming said thermally expandable microcapsule by (a-b) filling the melt mixture into a die and (c) subsequently opening the die
**characterized in that**
a period of time from the completion of filling of the melt mixture to the opening of the die is set to 2 to 4 seconds in said foaming step, and
the shell of the thermally expandable microcapsule comprises a copolymer having a segment derived from nitrile-type monomers and a segment derived from radical polymerizable unsaturated carboxylic acid monomers having a carboxyl group and having a carbon number of 3 to 8 other than ester residue; and 0.1 to 10% by weight of divalent or trivalent metal cations.

2. The method for producing a foamed article according to claim 1,
wherein a temperature of the die is set to 40°C or more in the foaming step.

3. The method for producing a foamed article according to claims 1 or 2,
wherein 0.5 to 20 parts by weight of the thermally expandable microcapsule is used with respect to 100 parts by weight of the matrix resin in the melting and kneading step.

## Patentansprüche

1. Verfahren zum Herstellen eines geschäumten Gegenstands durch Spritzgießen,
das umfasst:
einen Schmelz- und Knetschritt des Erhitzens eines Matrixharzes und einer thermisch expandierbaren Mikrokapsel, die eine Schäumungsbeginntemperatur von 160 bis 180 °C ausweist, auf eine Temperatur, die nicht geringer als die Schäumungsbeginntemperatur der thermisch expandierbaren Mikrokapsel ist, um eine Schmelzmischung herzustellen,
einen Schäumungsschritt (a-e) des Schäumens der thermisch expandierbaren Mikrokapsel durch (a-b) Einfüllen der Schmelzmischung in eine Form und (c) nachfolgendes Öffnen der Form,
**dadurch gekennzeichnet, dass**
in dem Schäumungsschritt eine Zeitdauer vom Beenden des Einfüllens der Schmelzmischung bis zum Öffnen der Form auf 2 bis 4 Sekunden eingestellt wird und
die Schale der thermisch expandierbaren Mikrokapsel ein Copolymer, das ein von nitrilartigen Monomeren abgeleitetes Segment und ein von radikalen polymerisierbaren ungesättigten Carbonsäuremonomeren mit einer Carboxylgruppe und einer Kohlenstoffzahl von 3 bis 8, die sich von der des Esterrückstands unterscheidet, abgeleitetes Segment aufweist, und 0,1 bis 10 Gew.-% zweiwertiger oder dreiwertiger Metallkationen umfasst.

2. Verfahren zum Herstellen eines geschäumten Gegenstands nach Anspruch 1,
wobei in dem Schäumungsschritt eine Temperatur der Form auf 40 °C oder mehr eingestellt wird.

3. Verfahren zum Herstellen eines geschäumten Gegenstands nach Anspruch 1 oder 2,
wobei in dem Schmelz- und Knetschritt 0,5 bis 20 Gewichtsteile der thermisch expandierbaren Mikrokapsel in Bezug auf 100 Gewichtsteile des Matrixharzes verwendet werden.

## Revendications

1. Procédé de production d'un article expansé par moulage par injection,
lequel comprend :
une étape de fusion et malaxage chauffant une résine de matrice, et une microcapsule thermiquement expansible présentant une température de début d'expansion de 160 à 180°C, à une température qui n'est pas inférieure à la température de début d'expansion de ladite microcapsule thermiquement expansible, pour produire un mélange à l'état de fusion,
une étape d'expansion (a-e) d'expansion de ladite microcapsule thermiquement expansible par (a-b) introduction du mélange à l'état de fusion dans une coquille et (c) ouverture subséquente de la coquille,
**caractérisé en ce que**
une période de temps à partir de l'achèvement d'introduction du mélange à l'état de fusion jusqu'à l'ouverture de la coquille est fixée à de 2 à 4 secondes dans ladite étape d'expansion, et
l'enveloppe de la microcapsule thermiquement expansible comprend un copolymère présentant un segment dérivé de monomères de type nitrile et un segment dérivé de monomères d'acides carboxyliques insaturés polymérisables radicalaires présentant un groupe carboxyle et présentant un nombre d'atomes de carbone de 3 à 8 différent d'un résidu ester ; et de 0,1 à 10 % en masse de cations de métaux divalents ou trivalents.

2. Procédé de production d'un article expansé selon la revendication 1,
dans lequel une température de la coquille est fixée à 40°C ou plus dans l'étape d'expansion.

3. Procédé de production d'un article expansé selon les revendications 1 ou 2,
dans lequel de 0,5 à 20 parties en masse de la microcapsule thermiquement expansible sont utilisées par rapport à 100 parties en masse de la résine de matrice dans l'étape de fusion et malaxage.
